# EUROPEAN PATENT SPECIFICATION

(11) **EP 0 789 293 B1**
(45) Date of publication and mention of the grant of the patent: **04.08.2004**
(21) Application number: 97300657.0
(22) Date of filing: 31.01.1997
(51) Int. Cl.: G06F 1/26, G06F 1/30, G06F 1/28

(54) **Smart switch for controlling the supply of power to a system**
Intelligenter Schalter zur Steuerung der Leistungsversorgung eines Systems
Commutateur intelligent pour commander l'alimentation d'énergie d'un système

(30) Priority: 09.02.1996 US 599030
(43) Date of publication of application: 13.08.1997
(73) Proprietor: SUN MICROSYSTEMS, INC., Mountain View, CA 94043 (US)
(72) Inventor: Smith, Robert L., Milpitas, California 95035 (US)
(74) Representative: W.P. Thompson & Co.

(56) References cited:
- EP-A- 0 176 342
- IBM TECHNICAL DISCLOSURE BULLETIN, vol. 32, no. 7, 1 December 1989, pages 347-349, XP000078124 "IMPROVED DATA RELIABILITY AND REDUCED CABLING HARDWARE"

## Description

The present invention relates to a method and apparatus for remotely controlling a plurality of systems.

More particularly, the present invention relates to the field of remotely monitoring and controlling target system(s).

Field service and maintenance of electrically-powered systems, e.g., database or video servers, at remote locations is generally a labor-intensive and hence an expensive activity. For example, after a power outage has occurred at a remote location, it is often necessary to power up the various systems in a particular order or sequence in order to minimize the risk of damaging the hardware and/or software/data of these systems. An exemplary conventional remote control device is disclosed in the parent application cited above.

Although conventional remote control devices are available for pre-defined installations, they are very limited in capability and not easily reconfigurable. Typically, commercially-available remote control devices are accessed by a system administrator via a pair of modems and a telephone line. Typically, these remote control devices are capable of remotely powering up/down a system or a bank of systems simultaneously, under the direct control of the system administrator.

Unfortunately, the system administrator or a service personnel has to visit the remote location each time a new system is added/deleted or when the existing systems need to be reconfigured. This is because, typically, each remote control device is dedicated to a single system or a bank of systems. As a result, these remote control devices are inflexible in their control of the systems.

Hence there is a need for a versatile, easily-configurable remote control device that can monitor status(es) of one or more systems and provide flexibility in controlling these systems.

EP-A-0176342 discloses a network of interconnected systems. All the systems have an internal power control ability regulated by a slave unit. The slave units are controlled by a central master logic unit. The master logic unit communicates to the slave logic units using a specialized protocol. According to the protocol, the master logic unit transmits a unique address to each of the slave units and the slave units respond by retransmitting their individual addresses back to the master logic unit. The master logic unit transmits command data to the slave units. The slave logic units check the command data and return the data back to the master logic unit. The master logic unit then resends the command data to the slave logic units, where the first received command data is compared to the second received command data - if both these sets of command data are in agreement, then and only then, will the slave units execute their commands.

In accordance with a first aspect of the present invention there is provided a method for remotely controlling a plurality of systems, said method comprising:
receiving control instructions passing through a pre-existing communication channel of the plurality of systems;
processing said control instructions by a remote controller;
directly sensing a first change in a status of a first system of said plurality of systems, said sensing being separate from said receiving and said processing, said status directly relating to the control instructions; and
upon sensing said first change, altering the status of said first system by transferring a message to a selected system of the plurality of systems, the message being in accordance with said control instructions for dissemination to the first system of the plurality of systems.

In accordance with a second aspect of the present invention there is provided a remote controller adapted to control a plurality of systems, said controller comprising:
a communication interface circuit configured to receive control instructions through a pre-existing communication channel;
a processor coupled to the communication interface circuit, said processor being configured to process said control instructions;
a first sensor physically separate from said communication interface circuit and said processor and coupled to said processor, the first sensor being adapted to a first system of the plurality of systems and configured to directly sense a change in a status of any of said plurality of systems, said status directly relating to the control instructions; and
a first controller coupled to said processor and adapted to the first system, the first controller being configured to alter said status of the first system in accordance with said control instructions.

Said status is preferably a voltage level of a primary power source associated with said first system, said first change is a lowering of said voltage level normally associated with a power outage or a brown-out of said primary power source.

The present invention will now be further described, by way of example, with reference to the accompanying drawings, in which:-
**Figure 1A** is a block diagram illustrating one exemplary use of an embodiment of a remote controller of the present invention.
**Figure 1B** is a block diagram showing the remote controller coupled in an alternate configuration with respect to a primary control system.
**Figures 2A-E** illustrate how the various components of the remote controller.
**Figure 3** is a detailed block diagram of a power-control circuitry of the remote controller.
**Figure 4** illustrates a power-sensing circuitry of the remote controller.
**Figure 5** is a circuit diagram showing a communication circuitry of the remote controller.
**Figure 6** shows an exemplary reset circuit for the remote controller.
**Figure 7** is a circuit diagram of a voltage regulator and a backup power supply for the remote controller.

### DESCRIPTION OF THE PREFERRED EMBODIMENT

In the following description, numerous details provide a thorough understanding of the present invention. These details include functional blocks and use an exemplary system status to assist one in implementing a remote controlling scheme. In addition, while the present invention has been described with reference to a specific implementation, the invention is applicable to a wide variety of electrically powered systems, architectures and environments. In other instances, well-known circuits and structures are not described in detail so as not to obscure the invention unnecessarily.

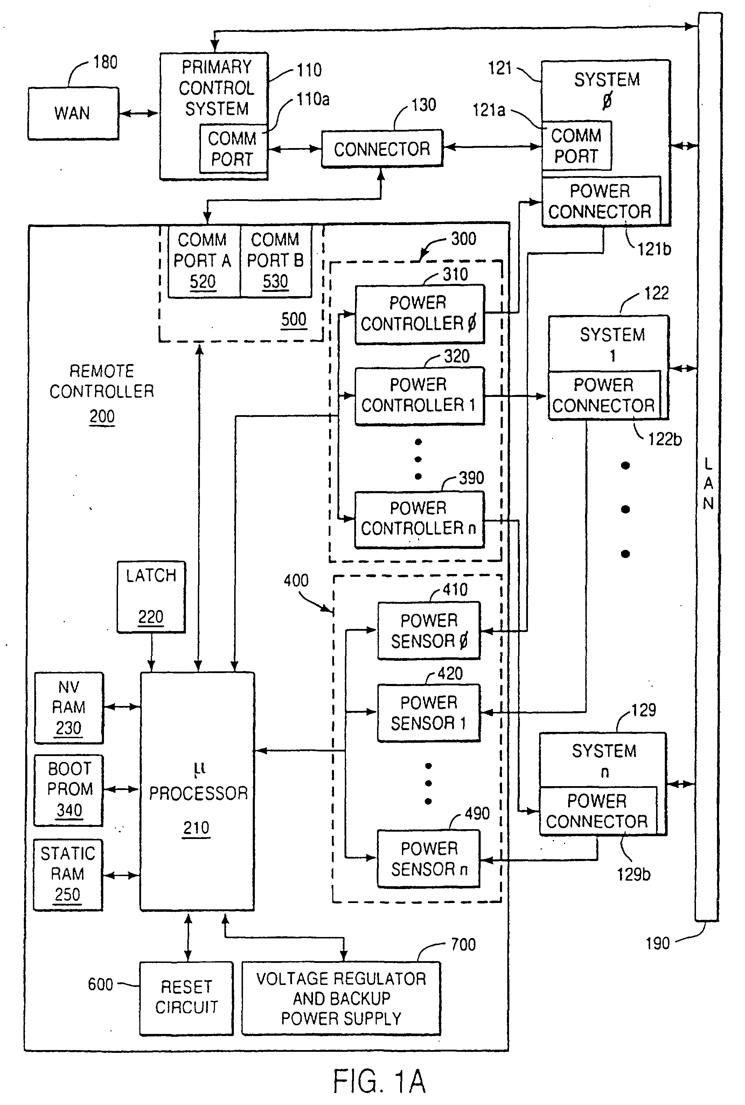

Figure 1A is a block diagram illustrating one exemplary use of an embodiment of a remote controller 200 of the present invention. In this example, the status(es) being monitored and controlled by remote controller 200 is the power source(s) for a plurality of systems 121, 122, ... 129. Other statuses such as power consumption, environmental electrical noise, and ambient/system temperature, are also possible.

Remote controller 200 includes a microprocessor 210, a latch 220, a non-volatile random access memory (NV RAM) 230, a boot programmable read-only memory (PROM) 340, a static RAM 250, a power-control circuitry 300, a power-sensing circuitry 400, a communication circuitry 500, a system reset circuitry 600, and a voltage regulator and backup power supply 700.

A primary control system 110 is coupled to system 121 via a connector 130. In this implementation, the communication protocol used for communicating between primary control system 110 and system 121 using connector 130 is the RS232 serial protocol. Remote controller 200 is able to communicate with either primary control system 110 and system 121 via a tap to connector 130.

Remote controller 200 is coupled to the plurality of systems 121, 122, ... 129 via a corresponding plurality of power sensors 410, 420, ... 490 and power controller 310, 320, ... 390. In addition, primary control system 110 and systems 121, 122,... 129 are coupled to each other via a local area network (LAN) 190. Primary control system 110 is also coupled to a wide area network (WAN) 180, which can be one of a number of WAN architectures, e.g., an ISDN link to a public telephone switch, a node coupled to the internet or a node coupled to a corporate-wide WAN.

In this configuration, remote controller 200 monitors the commands/responses between primary control system 110 and system 121, identifies commands/responses which are recognizable by remote controller 200 and provides appropriate control signals accordingly. The system administrator, physically located at a remote location, uses public network 180 to communicate with remote controller 200 by sending a message to primary control system 110 which then transmit an appropriate command for remote controller 200. For example, primary control system 110 may send an ASCII command string causing remote controller 200 to reprogram NV RAM 230 with a new reboot or power-up sequence for systems 121, 122,... 129.

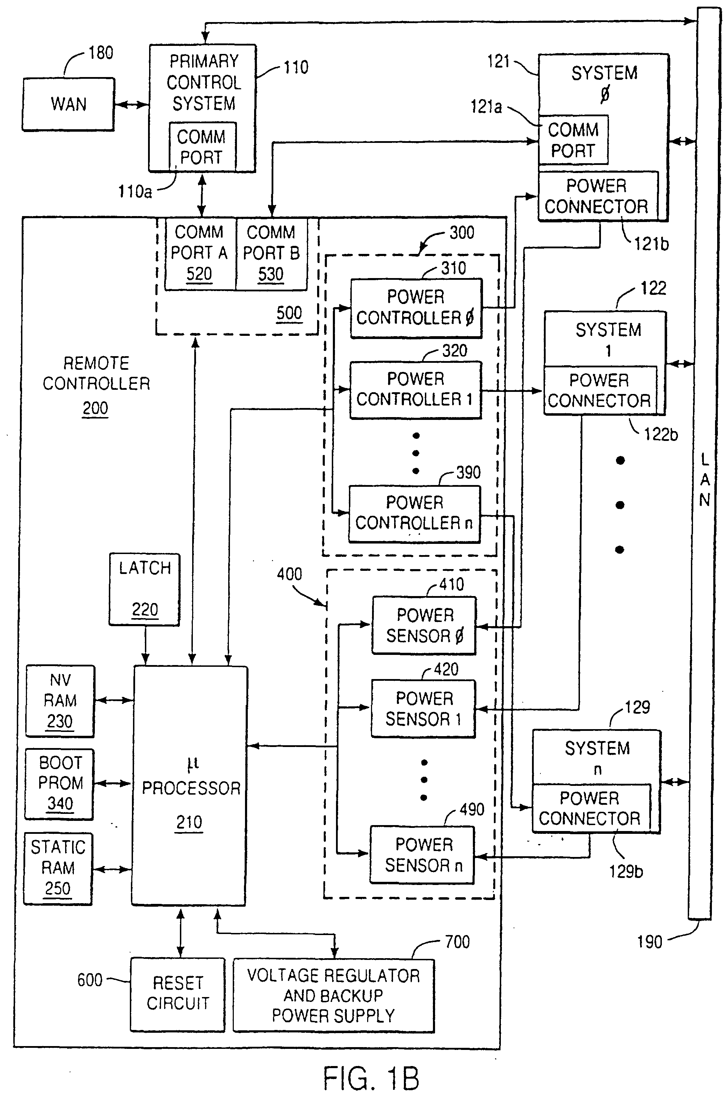

Figure 1B is a block diagram showing remote controller 200 coupled in an alternate configuration with respect to primary control system 110 and system 121. In this configuration, remote controller 200 can function in the passive mode described above, i.e., monitoring but not changing the commands/responses between primary control system 110 and system 121.

Alternatively, remote controller 200 can function as an active participant in the communication between primary control system 110 and system 121. For example, instead of merely monitoring a command from primary control system 110, remote controller 200 can now receive a command from primary control system 110 and send a different command to system 121 in response. Another exemplary active mode function involves remote controller 200 logging error messages from either primary control system 110 and sending a error report to secondary system 121, or vice versa.

Other configurations are possible. For example, an additional link may be provided between WAN 180 and system 121 so that should primary control system 110 fail, system 121 can function as a secondary or backup control system accessible by the system administrator. In this configuration, system 121 can send commands towards primary control system 110 which is then monitored by remote controller 200, thereby enabling the system administrator to communicate with remote controller 200 via WAN 180 and system 121, while bypassing primary control system 110.

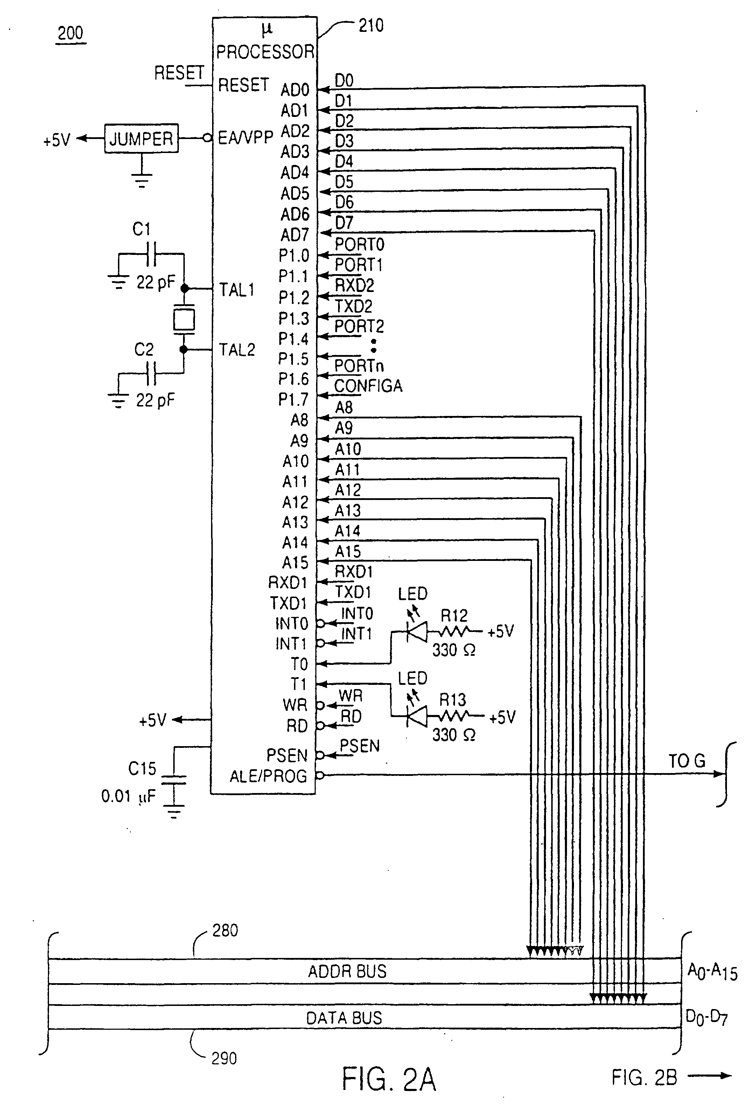

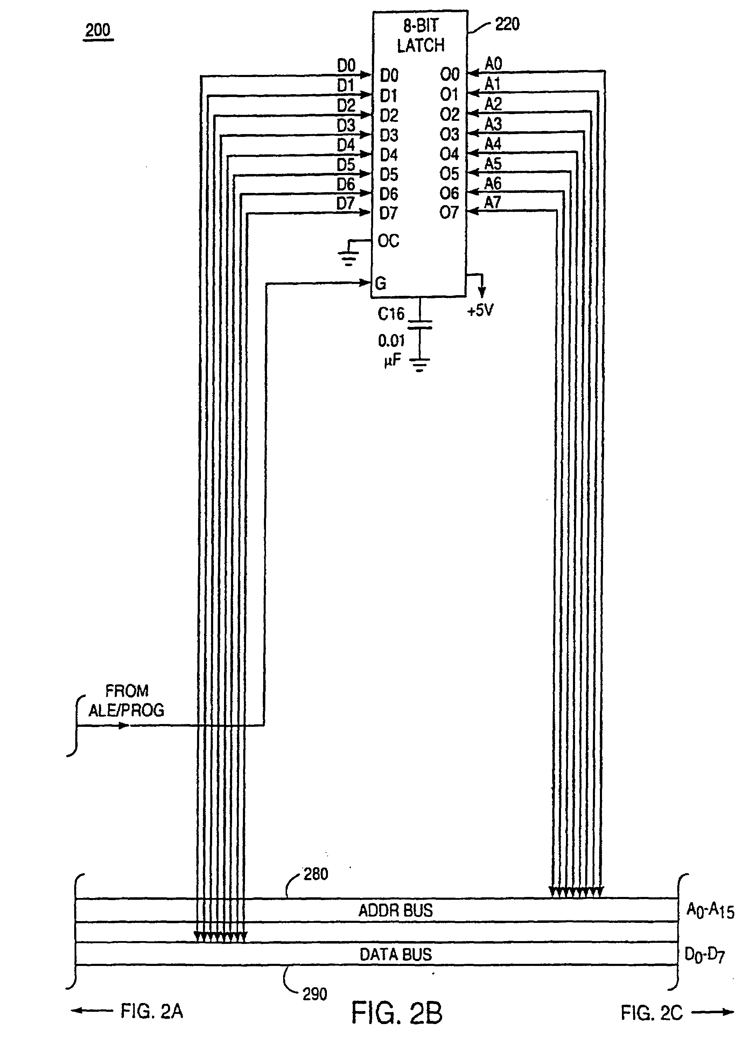

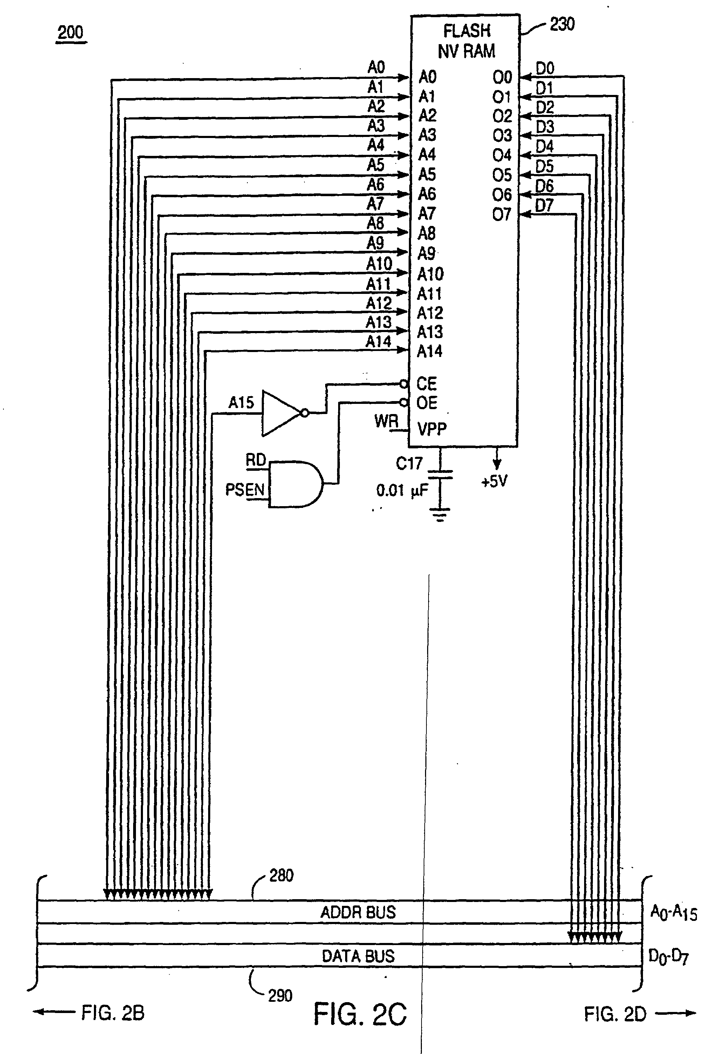

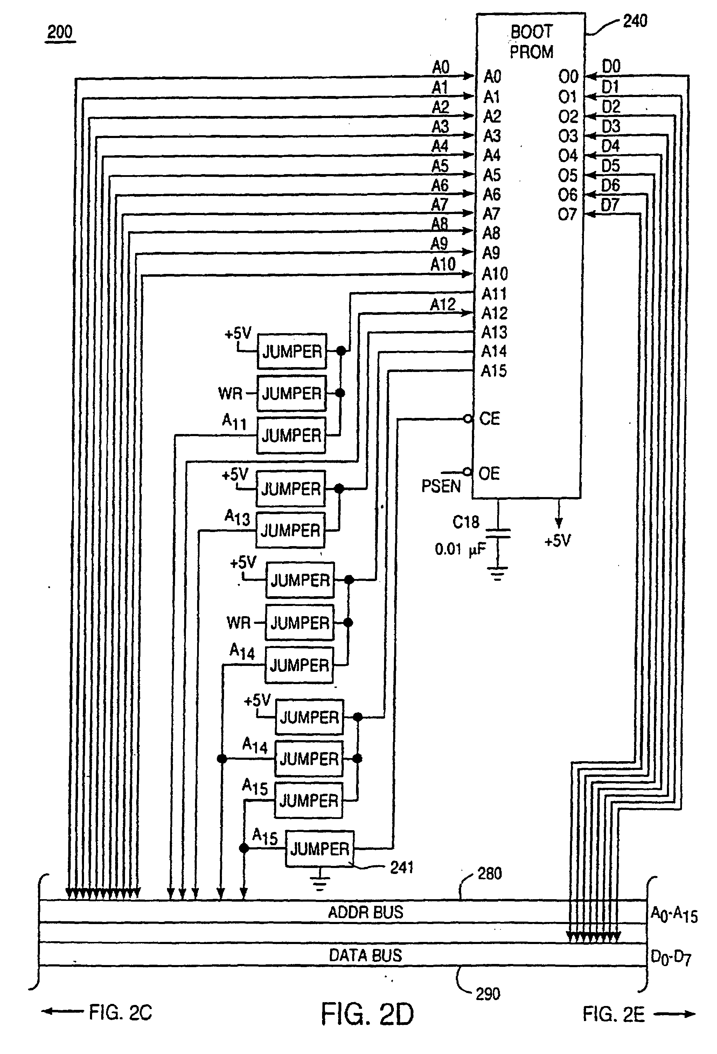

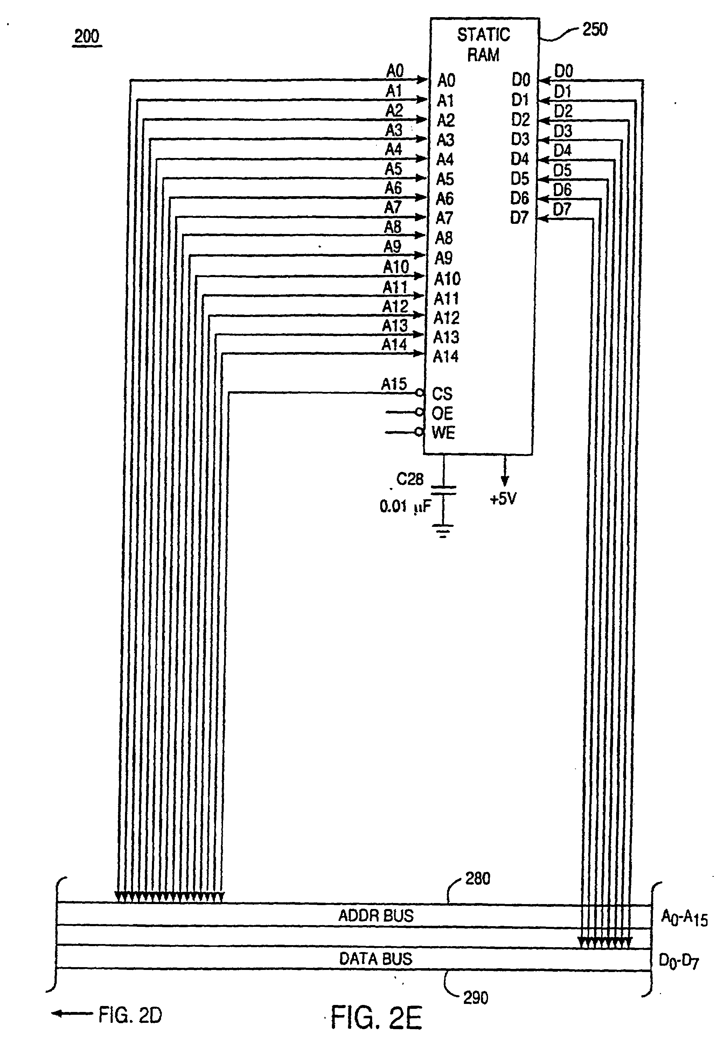

Figures 2A-E are detailed block diagrams illustrating how the various components of remote controller 200, i.e., microprocessor 210, latch 220, NV RAM 230, boot PROM 340 and static RAM 250, are coupled to an address bus 280 and a data bus 290.

Flash RAM 230 increases the programming flexibility of remote controller 200. For example, the reboot sequence for systems 121, 122,... 129 may be remotely selected and subsequently updated. New control sequence(s) can be added or changed to RAM 230 of remote controller 200 remotely by the system administrator via WAN 180 after installation. Flash RAM 230 also allows systems 121, 122, ... 129 to be identified with user-selectable names which can be updated. For example, systems 121, 122.... 129 may be given different names according to their function. In addition, the different levels of system passwords may be used in order to preserve an audit trail of any reboot of systems 121, 122, 129.

Latch 220 enable remote controller 200 to store the lower address bits of PROM 340. PROM 340 can be used to store program code such as bootstrap code. As shown in Figure 2D, jumper 241 is used to select the size and type of PROM 240, e.g. with respect to its address space.

Referring back to Figure 1A, remote controller 200 monitors and controls the plurality of systems 121, 122, ... 129 via power sensors 410, 420, ... 490 and power controllers 310, 320, ... 390, respectively. As discussed above, other statuses such as ambient temperature may be monitored in place of or in addition to the power source(s).

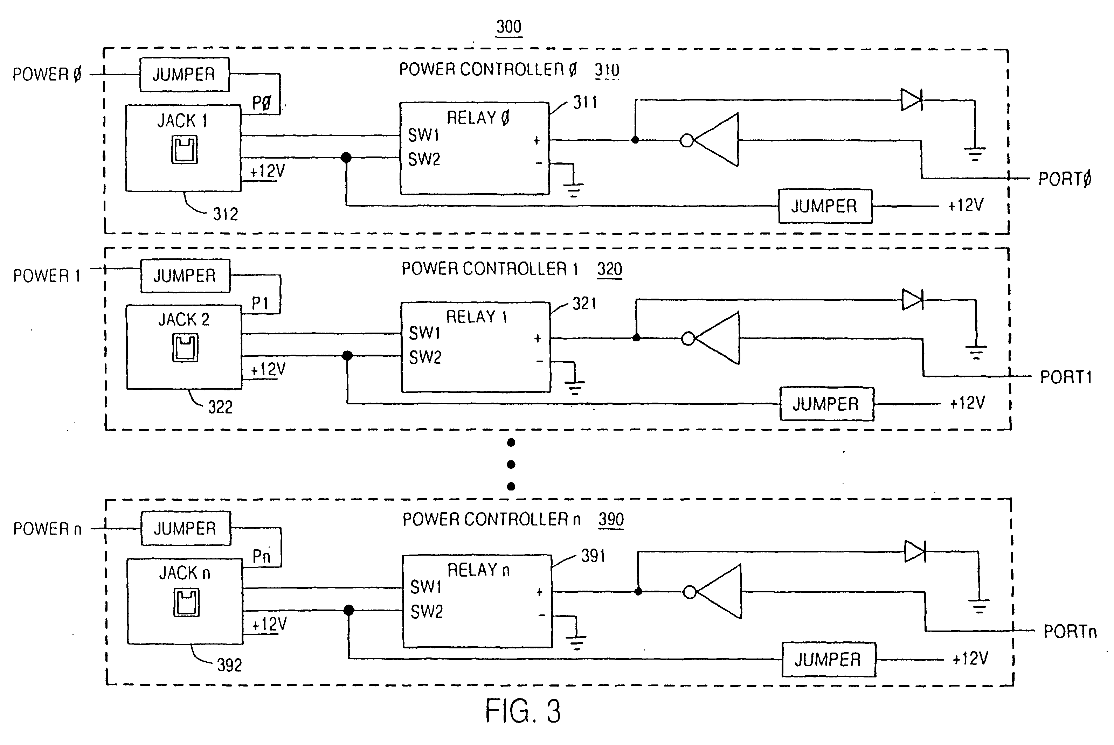

Figure 3 is a detailed block diagram of power-control circuitry 300 of remote controller 200 which includes power controllers 310, 320,... 390, for remotely controlling up to n+1 systems under the direction of control signals PORT0, PORT1, ... PORTn, respectively. Each power controller includes a relay and a jack for coupling/uncoupling the respective power source to/from each system. For example, power controller 310 includes relay 311 and jack 312 for powering up/down system 121. Hence, power-control circuitry 300 provides remote controller 200 with a great deal of flexibility in powering up/down systems 121, 122, ... 129.

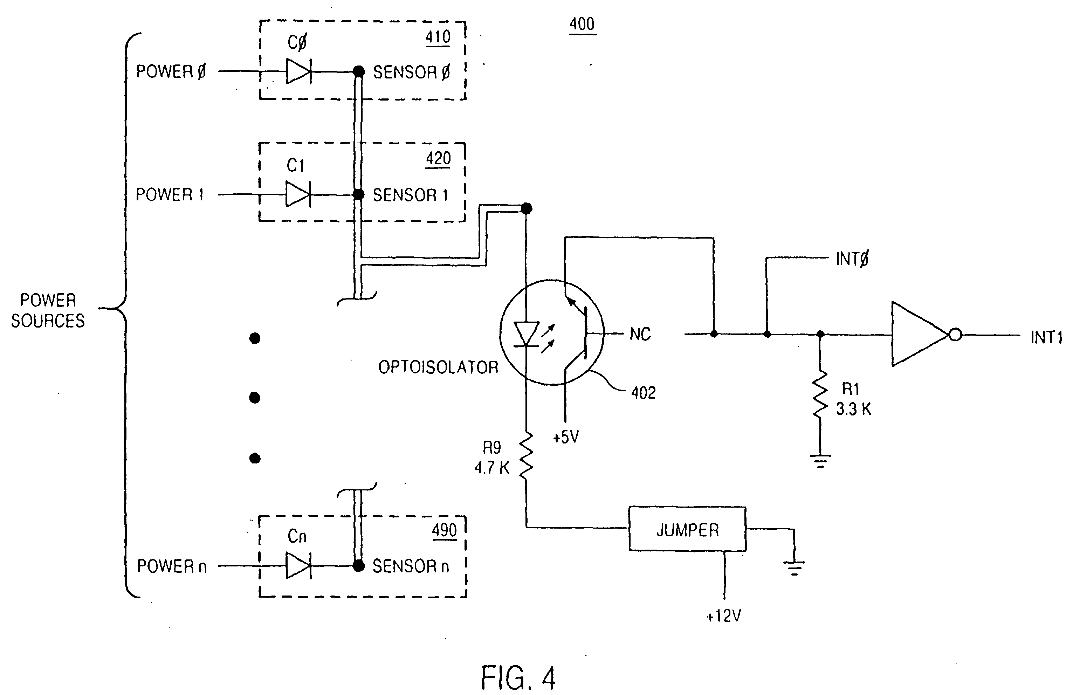

Figure 4 illustrates power-sensing circuitry 400 of remote controller 200 which includes power sensors 410, 420, ... 490, for remotely sensing up to n+1 power sources. By monitoring the power statuses of systems 121, 122, ... 129, remote controller 200 can exercise intelligent control of the systems 121, 122, ... 129. For example, in the event of a brown-out which may indicate an impending power outage, remote controller 200 can send a message to system 121, which can then propagate the brown-out warning to systems 122,... 129 via LAN 190. Systems 121, 122,... 129 can then gracefully backup data in anticipation of a shutdown. In this embodiment, sensors 410, 420,... 490 are coupled to and share the same optoisolator. If more granularity or better response time is needed, separate optoisolators may be used for each power sensor.

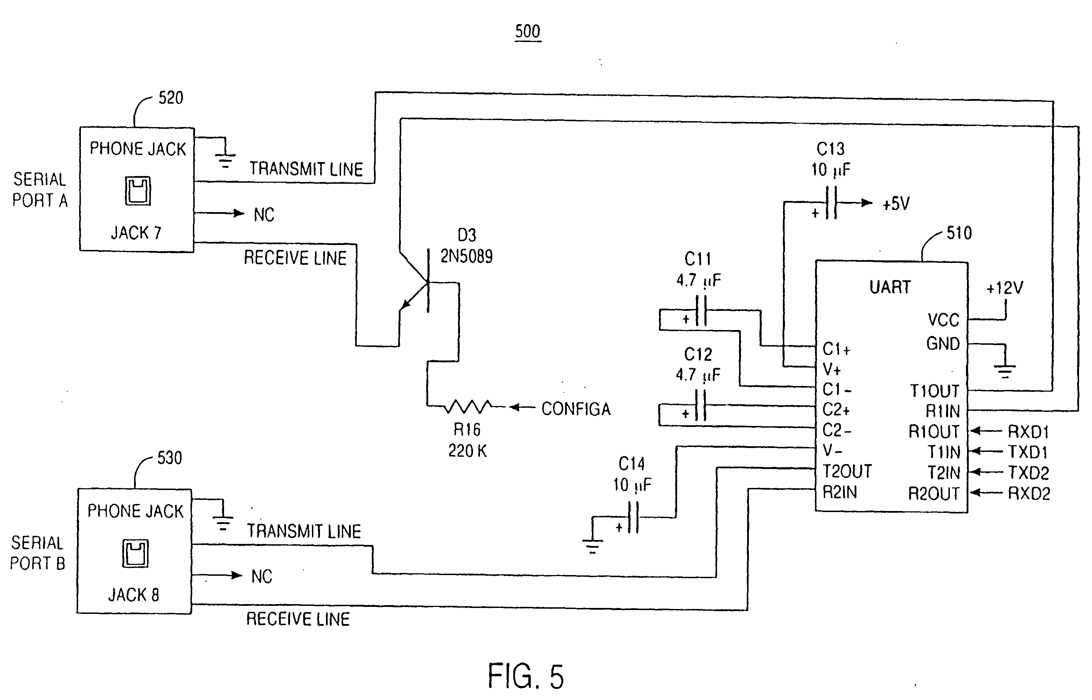

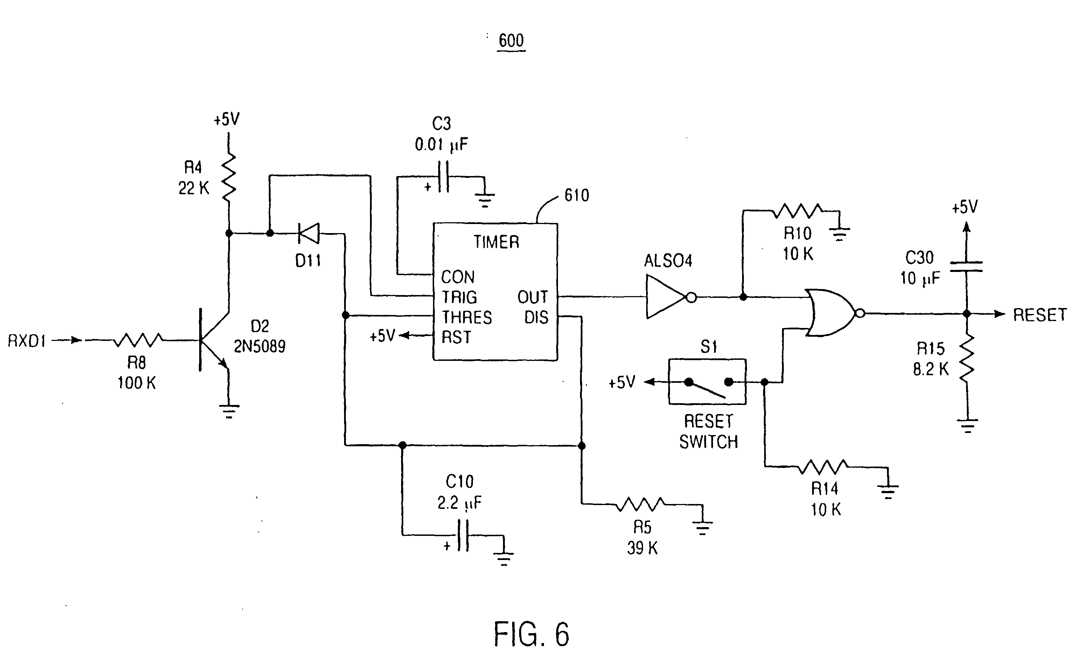

Figure 5 is a circuit diagram showing communication circuitry 500 with two serial interfaces, a pair of RS-232 ports 520 and 530 coupled to a dual-channel RS-232 driver 510, for communicating with primary control system 110. Figure 6 shows the exemplary reset circuit 600 for remote controller 200.

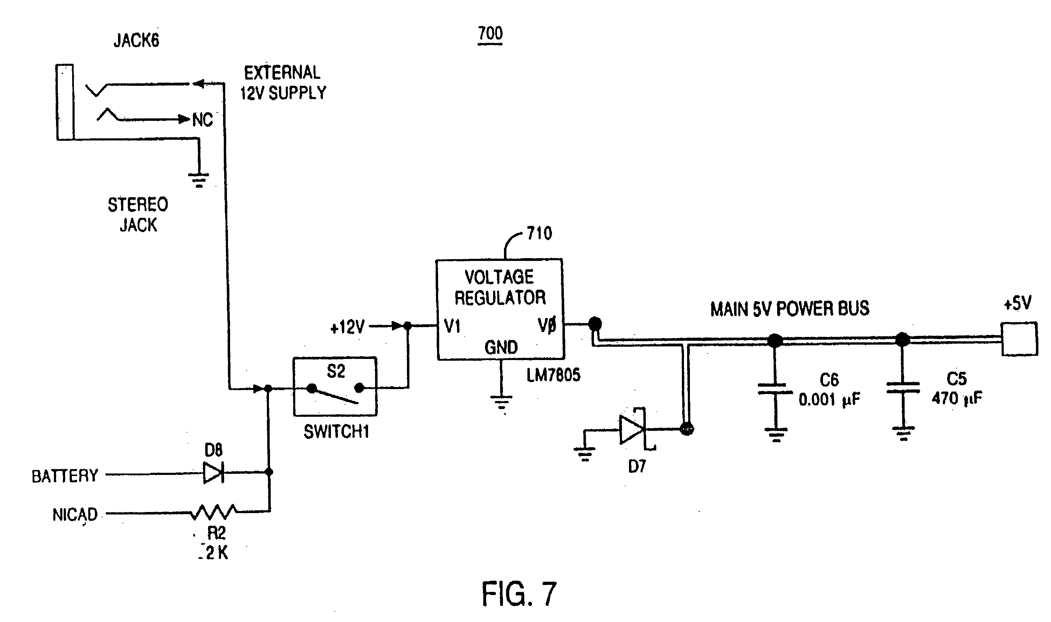

Figure 7 is a circuit diagram of voltage regulator and backup power supply 700 of remote controller 200. An external 12 volt supply is coupled to voltage regulator 710. Backup power is provided by both a conventional battery and/or a rechargeable battery such as a NiCd battery.

The following table includes an exemplary list of integrated circuits for remote controller 200:

| | |
|---|---|
| Microprocessor 210 | DS80C320 |
| Latch 220 | 74HC373 |
| NV RAM 230 | AT29C256 |
| Boot PROM 240 | 27C64 |
| Static RAM 250 | KM62256 |
| Optoisolator 402 | 4N26 |
| UART 510 | MAX232 |
| Timer 610 | LMC555 |
| Voltage Regulator 710 | LM7805 |

The remote controller can be reprogrammed using additional control instructions so that a different control sequence can be used. For example, the same primary source may be shared by several target systems and the control sequence indicate the order in which the various target systems are powered down/up

Other statuses are possible. For example, the status to be monitored may be the ambient temperature at the remote location, and the altering step may include increasing/decreasing the air-conditioning flow rate at the remote location.

Other modifications are possible without departing from the scope of the invention as defined by the appended claims. For example, the remote controller of the present invention can be adapted for regular maintenance and diagnostics.

## Claims

1. A method for remotely controlling a plurality of systems (121,..,129), said method comprising:
receiving control instructions passing through a pre-existing communication channel of the plurality of systems (121,..,129);
processing said control instructions by a remote controller (200);
directly sensing a first change in a status of a first system (121) of said plurality of systems (121,....,129), said sensing being separate from said receiving and said processing, said status directly relating to the control instructions; and
upon sensing said first change, altering the status of said first system (121) by transferring a message to a selected system of the plurality of systems, the message being in accordance with said control instructions for dissemination to the first system (121) of the plurality of systems.

2. A method according to claim 1 wherein said status is a voltage level of a primary power source associated with said first system (121), said first change is a lowering of said voltage level normally associated with a power outage or a brown-out of said primary power source.

3. A method according to claim 1 further comprising:
directly sensing a second change in the status of said first system (121); and
upon sensing said second change, re-altering the status of said first system (121) in accordance with said control instructions.

4. A method according to claim 3 wherein said status is a voltage level of a primary power source associated with said first system (121), said first change is a lowering of said voltage level normally associated with a power outage or a brown-out of said primary power source.

5. A method according to claim 4 wherein said primary power supply is also coupled to a second system (122) of said plurality of systems, and said altering and re-altering acts also decouple and re-couple said power supply to and from said second system, respectively.

6. A method according to any of claims 1 to 5 further comprising reprogramming said remote controller (200).

7. A method according to claim 6 wherein said reprogramming includes:
transmitting additional control instructions through the pre-existing communication channel; and
receiving and processing said additional control instructions by said remote controller (200).

8. A remote controller (200) adapted to control a plurality of systems (121,...129), said controller (200) comprising:
a communication interface circuit (500) configured to receive control instructions through a pre-existing communication channel;
a processor (210) coupled to the communication interface circuit, said processor being configured to process said control instructions;
a first sensor physically separate from said communication interface circuit (500) and said processor and coupled to said processor, the first sensor (410) being adapted to a first system (121) of the plurality of systems and configured to directly sense a change in a status of any of said plurality of systems, said status directly relating to the control instructions; and
a first controller (310) coupled to said processor and adapted to the first system, the first controller being configured to alter said status of the first system (121) in accordance with said control instructions.

9. A remote controller (200) according to claim 8 wherein said status is a voltage level of a primary power source associated with said first system (121), said change is a lowering of said voltage level normally associated with a power outage or a brown-out of said primary power source, and said first controller (310) is a switch for coupling/decoupling said first system (121) to/from said power source.

10. A remote controller according to claim 8 further comprising:
a second sensor (420) configured to directly sense a change in a status of a second system (122) of said plurality of systems; and
a second controller (320) configured to alter the status of said second system (122) in accordance with said control instructions.

11. A remote controller (200) according to claim 10 wherein said status is respective voltage levels of primary power sources associated with said first and second system (121, 122), said change is a lowering of said voltage levels normally associated with a power outage or a brown-out of said primary power sources, and said first and second controllers (310, 320) are switches for coupling/decoupling said first and second systems (121, 122) to/from said power sources.

12. A remote controller (200) according to claim 8 further comprising a reprogrammable memory configured to store said control instructions (230).

13. A remote controller (200) according to claim 8 further comprising a tap connector (130) attached to the pre-existing communication channel (1100) to allow the control instruction to be routed to both a first system (121) of the plurality of systems and the communication interface circuit (500).

## Patentansprüche

1. Verfahren zum Fernsteuern einer Mehrzahl von Systemen (121, ..., 129), wobei das Verfahren die folgenden Schritte umfasst:
Empfangen von Steueranweisungen, die durch einen vorexistierenden Kommunikationskanal der Mehrzahl von Systemen (121, ..., 129) passieren;
Verarbeiten der genannten Steueranweisungen durch einen Ferncontroller (200);
direktes Erfassen einer ersten Änderung eines Status eines ersten Systems (121) aus der genannten Mehrzahl von Systemen (121, ..., 129), wobei das genannte Erfassen von dem genannten Empfangen und dem genannten Verarbeiten separat ist, wobei sich der genannte Status direkt auf die Steueranweisungen bezieht; und
nach dem Erfassen der genannten ersten Änderung, Ändern des Status des genannten ersten Systems (121) durch Übertragen einer Meldung zu einem gewählten System aus der Mehrzahl von Systemen, wobei die Meldung den genannten Steueranweisungen zur Verbreitung zu dem ersten System (121) aus der Mehrzahl von Systemen entspricht.

2. Verfahren nach Anspruch 1, wobei der genannte Status ein Spannungspegel einer mit dem genannten ersten System (121) assoziierten Primärleistungsquelle ist, wobei die genannte erste Änderung eine Verringerung des genannten Spannungspegels ist, die normalerweise mit einem Stromausfall oder einem Brownout der genannten Primärleistungsquelle assoziiert ist.

3. Verfahren nach Anspruch 1, das ferner Folgendes umfasst:
direktes Erfassen einer zweiten Änderung des Status des genannten ersten Systems (121); und
nach dem Erfassen der genannten zweiten Änderung erneutes Ändern des Status des genannten ersten Systems (121) gemäß den genannten Steueranweisungen.

4. Verfahren nach Anspruch 3, wobei der genannte Status ein Spannungspegel einer mit dem genannten ersten System (121) assoziierten Primärleistungsquelle ist, wobei die genannte erste Änderung eine Verringerung des genannten Spannungspegels ist, die normalerweise mit einem Stromausfall oder einem Brownout der genannten Primärleistungsquelle assoziiert ist.

5. Verfahren nach Anspruch 4, wobei die genannte Primärleistungsquelle auch mit einem zweiten System (122) aus der genannten Mehrzahl von Systemen gekoppelt ist, und wobei das genannte Ändern und erneute Ändern auch dazu führt, dass die genannte Stromversorgung jeweils von dem genannten zweiten System abgetrennt und wieder damit verbunden wird.

6. Verfahren nach einem der Ansprüche 1 bis 5, ferner umfassend das Umprogrammieren des genannten Ferncontrollers (200).

7. Verfahren nach Anspruch 6, wobei das genannte Umprogrammieren Folgendes beinhaltet:
Übertragen von zusätzlichen Steueranweisungen durch den vorexistierenden Kommunikationskanal; und
Empfangen und Verarbeiten der genannten zusätzlichen Steueranweisungen durch den genannten Ferncontroller (200).

8. Ferncontroller (200) zum Steuern einer Mehrzahl von Systemen (121, ..., 129), wobei der genannte Controller (200) Folgendes umfasst:
eine Kommunikationsschnittstellenschaltung (500), die zum Empfangen von Steueranweisungen durch einen vorexistierenden Kommunikationskanal konfiguriert ist;
einen Prozessor (210) in Verbindung mit der Kommunikationsschnittstellenschaltung, wobei der genannte Prozessor zum Verarbeiten der genannten Steueranweisungen konfiguriert ist;
einen ersten Sensor, der von der genannten Kommunikationsschnittstellenschaltung (500) und dem genannten Prozessor physisch separat und mit dem genannten Prozessor gekoppelt ist, wobei der erste Sensor (410) an ein erstes System (121) aus der Mehrzahl von Systemen angepasst und so konfiguriert ist, dass er eine Änderung des Status von einem aus der genannten Mehrzahl von Systemen direkt erfasst, wobei sich der genannte Status direkt auf die Steueranweisungen bezieht; und
einen ersten Controller (310), der mit dem genannten Prozessor gekoppelt und an das erste System angepasst ist, wobei der erste Controller so konfiguriert ist, dass er den genannten Status des ersten Systems (121) gemäß den genannten Steueranweisungen ändert.

9. Ferncontroller (200) nach Anspruch 8, wobei der genannte Status ein Spannungspegel einer mit dem genannten ersten System (121) assoziierten Primärleistungsquelle ist, wobei die genannte Änderung eine Verringerung des genannten Spannungspegels ist, die normalerweise mit einem Stromausfall oder einem Brownout der genannten Primärleistungsquelle assoziiert ist, und wobei der genannte erste Controller (310) ein Schalter zum Verbinden/Abtrennen des genannten ersten Systems (121) mit/von der genannten Leistungsquelle ist.

10. Ferncontroller nach Anspruch 8, der ferner Folgendes umfasst:
einen zweiten Sensor (420), der so konfiguriert ist, dass er direkt eine Änderung des Status eines zweiten Systems (122) aus der genannten Mehrzahl von Systemen erfasst; und
einen zweiten Controller (320), der so konfiguriert ist, dass er den Status des genannten zweiten Systems (122) gemäß den genannten Steueranweisungen ändert.

11. Ferncontroller (200) nach Anspruch 10, wobei der genannte Status jeweilige Spannungspegel von Primärleistungsquellen ist, die mit dem genannten ersten und zweiten System (121, 122) assoziiert sind, wobei die genannte Änderung eine Verringerung der genannten Spannungspegel ist, die normalerweise mit einem Stromausfall oder einem Brownout der genannten Primärleistungsquellen assoziiert ist, und wobei der genannte erste und zweite Controller (310, 320) Schalter zum Verbinden/Abtrennen des genannten ersten und zweiten Systems (121, 122) mit/von den genannten Leistungsquellen sind.

12. Ferncontroller (200) nach Anspruch 8, ferner umfassend einen umprogrammierbaren Speicher, der zum Speichern der genannten Steueranweisungen (230) konfiguriert ist.

13. Ferncontroller (200) nach Anspruch 8, ferner umfassend einen Anzapfverbinder (130), der an dem vorexistierenden Kommunikationskanal (1100) angebracht ist, damit die Steueranweisung sowohl zu einem ersten System (121) aus der Mehrzahl von Systemen als auch zu der Kommunikationsschnittstellenschaltung (500) geleitet werden kann.

## Revendications

1. Procédé de commande à distance d'une pluralité de systèmes (121,...,129), ledit procédé comprenant :
la réception d'instructions de commande passant par un canal de communication pré-existant de la pluralité de systèmes (121,...,129) ;
le traitement desdites instructions de commande par un contrôleur distant (200) ;
la détection directe d'un premier changement d'un état d'un premier système (121) de ladite pluralité de systèmes (121, ..., 129), ladite détection étant séparée de ladite réception et dudit traitement, ledit état se rapportant directement aux instructions de commande ; et
lors de la détection dudit premier changement, la modification de l'état dudit premier système (121) en transférant un message à un système sélectionné de la pluralité de systèmes, le message étant conforme auxdites instructions de commande destinées à être distribuées au premier système (121) de la pluralité de systèmes.

2. Procédé selon la revendication 1, dans lequel ledit état est un niveau de tension d'une source d'alimentation principale associée audit premier système (121), ledit premier changement est une réduction dudit niveau de tension normalement associée à une coupure d'alimentation ou à une baisse de tension de ladite source d'alimentation principale.

3. Procédé selon la revendication 1, comprenant en outre :
la détection directe d'un deuxième changement de l'état dudit premier système (121) ; et
lors de la détection dudit deuxième changement, la modification à nouveau de l'état dudit premier système (121) conformément auxdites instructions de commande.

4. Procédé selon la revendication 3, dans lequel ledit état est un niveau de tension d'une source d'alimentation principale associée audit premier système (121), ledit premier changement est une réduction dudit niveau de tension normalement associée à une coupure d'alimentation ou à une baisse de tension de ladite source d'alimentation principale.

5. Procédé selon la revendication 4, dans lequel ladite alimentation principale est aussi couplée à un deuxième système (122) de ladite pluralité de systèmes, et lesdites actions de modification et de nouvelle modification également découplent et recouplent ladite alimentation dudit et audit deuxième système, respectivement.

6. Procédé selon l'une quelconque des revendications 1 à 5, comprenant en outre la reprogrammation dudit contrôleur distant (200).

7. Procédé selon la revendication 6, dans lequel ladite reprogrammation comporte :
la transmission d'instructions de commande supplémentaires par le canal de communication pré-existant ; et
la réception et le traitement desdites instructions de commande supplémentaires par ledit contrôleur distant (200).

8. Contrôleur distant (200) adapté pour commander une pluralité de systèmes (121,...,129), ledit contrôleur (200) comprenant :
un circuit d'interface de communication (500) configuré pour recevoir des instructions de commande par un canal de communication pré-existant ;
un processeur (210) couplé au circuit d'interface de communication, ledit processeur étant configuré pour traiter lesdites instructions de commande ;
un premier capteur physiquement distinct dudit circuit d'interface de communication (500) et dudit processeur et couplé audit processeur, le premier capteur (410) étant adapté à un premier système (121) de la pluralité de systèmes et configuré pour détecter directement un changement d'un état de l'un quelconque de ladite pluralité de systèmes, ledit état se rapportant directement aux instructions de commande ; et
un premier contrôleur (310) couplé audit processeur et adapté au premier système, le premier contrôleur étant configuré pour modifier ledit état du premier système (121) conformément auxdites instructions de commande.

9. Contrôleur distant (200) selon la revendication 8, dans lequel ledit état est un niveau de tension d'une source d'alimentation principale associée audit premier système (121), ledit changement est une réduction dudit niveau de tension normalement associée à une coupure d'alimentation ou à une baisse de tension de ladite source d'alimentation principale, et ledit premier contrôleur (310) est un commutateur pour coupler/découpler ledit premier système (121) à/de ladite source d'alimentation.

10. Contrôleur distant selon la revendication 8, comprenant en outre :
un deuxième capteur (420) configuré pour détecter directement un changement d'un état d'un deuxième système (122) de ladite pluralité de systèmes ; et
un deuxième contrôleur (320) configuré pour modifier l'état dudit deuxième système (122) conformément auxdites instructions de commande.

11. Contrôleur distant (200) selon la revendication 10, dans lequel ledit état est des niveaux de tension respectifs de sources d'alimentation principales associées auxdits premier et deuxième systèmes (121, 122), ledit changement est une réduction desdits niveaux de tension normalement associée à une coupure d'alimentation ou à une baisse de tension desdites sources d'alimentation principales, et lesdits premier et deuxième contrôleurs (310, 320) sont des commutateurs pour coupler/découpler lesdits premier et deuxième systèmes (121, 122) auxdites/desdites sources d'alimentation.

12. Contrôleur distant (200) selon la revendication 8, comprenant en outre une mémoire reprogrammable configurée pour mémoriser lesdites instructions de commande (230).

13. Contrôleur distant (200) selon la revendication 8, comprenant en outre un connecteur de prise (130) relié au canal de communication pré-existant (1100) afin de permettre le routage de l'instruction de commande à la fois à un premier système (121) de la pluralité de systèmes et au circuit d'interface de communication (500).
